# FASCICULE DE BREVET EUROPEEN

(11) **EP 3 583 446 B1**
(45) Date de publication et mention de la délivrance du brevet: **02.11.2022**
(21) Numéro de dépôt: 18703794.0
(22) Date de dépôt: 13.02.2018
(51) Int. Cl.: G01T 1/185, H01J 47/02, G01T 1/29

(54) **DÉTECTEUR GAZEUX DE PARTICULES ÉLÉMENTAIRES**
ELEMENTARTEILCHEN-GASDETEKTOR
ELEMENTARY PARTICLES GAS DETECTOR

(30) Priorité: 15.02.2017 FR 1751215
(43) Date de publication de la demande: 25.12.2019
(73) Titulaire: Université Claude Bernard Lyon 1, 69100 Villeurbanne (FR); Centre National de la Recherche Scientifique, 75016 Paris (FR)
(72) Inventeur: LAKTINEH, Imad, 01120 Thil (FR)
(74) Mandataire: Colombo, Michel
(86) Numéro de dépôt international: PCT/EP2018/053561
(87) Numéro de publication internationale: WO 2018/149827

(56) Documents cités:
- EP-A1- 2 562 563
- BELKACEM A ET AL: "A NEW TYPE OF MULTIPARTICLE IMAGING DETECTOR", REVIEW OF SCIENTIFIC INSTRUMENTS, AIP, MELVILLE, NY, US, vol. 61, no. 3, 2 mars 1990 (1990-03-02), pages 945-952, XP000104374, ISSN: 0034-6748, DOI: 10.1063/1.1141447
- TAI-HUA LIN ET AL: "Signal characteristics of a resistive-strip micromegas detector with an integrated two-dimensional readout", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 767, 10 septembre 2014 (2014-09-10), pages 281-288, XP055417990, NL ISSN: 0168-9002, DOI: 10.1016/j.nima.2014.09.002

## Description

L'invention concerne un détecteur gazeux de particules élémentaires et une plaque de lecture pour un tel détecteur gazeux.

Les détecteurs gazeux de particules élémentaires sont utilisés pour déterminer la trajectoire des particules élémentaires qui les traversent.

Des détecteurs gazeux de particules élémentaires connus comportent à cet effet :
- une chambre à gaz renfermant un gaz apte à générer au moins une charge primaire lorsqu'il est traversé par la particule élémentaire à détecter, cette charge primaire étant soit un électron soit un ion,
- un dispositif d'amplification apte, à partir de la charge primaire générée, à produire une avalanche de charges secondaires,
- une plaque de lecture comportant une face extérieure agencée de manière à être percutée par l'avalanche de charges secondaires, cette plaque comportant dans l'ordre en se rapprochant de sa face extérieure :
   - une couche diélectrique présentant une face avant tournée vers la face extérieure,
   - des bandes conductrices s'étendant principalement parallèlement à la face avant dans au moins trois directions différentes, chaque bande conductrice s'étendant depuis une première extrémité jusqu'à une seconde extrémité électriquement raccordée à une entrée respective d'un capteur de charges électriques,
- le capteur de charges électriques,
- une unité de traitement apte à déterminer la position d'un point d'impact entre la particule élémentaire à détecter et la chambre à gaz à partir de la quantité de charges électriques mesurées sur chaque bande conductrice par le capteur de charges électriques et à partir de la position connue de ces bandes conductrices dans la plaque de lecture.

Plus précisément, lorsqu'une particule élémentaire traverse la chambre à gaz, elle heurte une molécule du gaz et, au niveau de ce point d'impact, crée une ou plusieurs paires ion-électron. Ensuite, c'est cet électron ou cet ion dont on détermine la position afin de détecter la présence de la particule élémentaire. La charge primaire est l'ion ou l'électron dont on cherche à déterminer la position.

Par exemple, un tel détecteur gazeux, connu sous le nom de MICROMEGAS, est divulgué dans l'article suivant : M. Byszewski *et al*.: « Resistive-strips micromegas detectors with two-dimensional readout », 2nd INTERNATIONAL CONFERENCE ON MICRO PATTERN GASEOUS DETECTORS , 29/08 - 1/09/2011, K OBE , JAPAN.

Le détecteur divulgué dans cet article présente plusieurs avantages. En particulier, le fait qu'il utilise des bandes conductrices et non pas des pastilles conductrices individuelles, comme dans la technologie alternative, limite le nombre d'entrées dont doit être équipé le capteur de charges électriques. Les pastilles conductrices individuelles sont connues sous le terme anglais de « pad ». Dans la technologie alternative, la face avant de la couche diélectrique est recouverte de pastilles conductrices électriquement isolées les unes des autres et raccordées électriquement et individuellement à une entrée respective du capteur de charge. Ainsi, dans la technologie alternative, le capteur de charges électriques doit comporter autant d'entrées que de pastilles conductrices. Or, pour recouvrir la face avant, il faut de très nombreuses pastilles conductrices. À l'inverse, pour recouvrir la même face avant avec des bandes conductrices qui s'étendent d'un côté à l'autre de cette face avant, il faut beaucoup moins de bandes conductrices et donc beaucoup moins d'entrées pour le capteur de charges.

Par contre, contrairement à un plot conducteur, une variation de la charge électrique d'une bande conductrice donne uniquement une information sur la position du point d'impact dans une direction perpendiculaire à cette bande conductrice. En effet, par exemple, il n'est pas possible de savoir, à partir de la mesure de la charge électrique d'une seule bande, si le point d'impact est plus proche de la première ou de la deuxième extrémité de la bande conductrice.

Pour lever cette imprécision, des premières bandes conductrices parallèles les unes aux autres s'étendent parallèlement à une première direction et des secondes bandes conductrices parallèles les unes aux autres s'étendent parallèlement à une seconde direction qui croise la première direction. De plus, ces premières et deuxièmes bandes conductrices sont agencées de manière à ce que chaque point d'impact provoque une variation de la charge électrique d'au moins une première et une deuxième bandes conductrices. Grâce à cela, la position précise du point d'impact peut être déterminée car il est nécessairement situé à proximité de l'emplacement où les première et deuxième bandes conductrices se croisent. Comme décrit dans l'article de M. Byszewski, de préférence, on utilise en plus des troisièmes bandes conductrices parallèles les unes aux autres qui s'étendent parallèlement à une troisième direction différente des première et deuxième directions. En effet, dans ce cas, il est alors possible de déterminer, sans ambiguïté, la position de deux points d'impact simultanés, ce qui n'est pas possible dans la plupart des cas si seulement des premières et une deuxièmes bandes conductrices sont utilisées.

D'un côté, les premières, deuxièmes et troisièmes bandes conductrices doivent être électriquement isolées les unes des autres. D'un autre côté, ces premières, deuxièmes et troisièmes bandes conductrices doivent se croiser. Pour obtenir ce résultat, les premières, deuxièmes et troisièmes bandes conductrices sont réalisées sur trois niveaux de profondeur différents dans la couche diélectrique. Par exemple, les premières bandes conductrices sont réalisées sur la face avant de la couche diélectrique, les deuxièmes bandes conductrices sont réalisées plus profondément à l'intérieur de la couche diélectrique et les troisième bandes conductrices sont réalisées encore plus profondément à l'intérieur de cette couche diélectrique.

À cause de cet agencement des bandes conductrices, les premières, deuxièmes et troisièmes bandes conductrices doivent être réalisées les unes après les autres, ce qui complexifie la fabrication de la plaque de lecture et donc du détecteur. De plus, étant donné que les deuxièmes et troisièmes bandes conductrices sont plus éloignées du point d'impact que les premières bandes conductrices, leur sensibilité respective sont différentes. Il est donc nécessaire de prévoir un mécanisme pour compenser cette différence de sensibilité. Par exemple, pour cela, dans l'article de M. Byszewski, il est prévu que les bandes conductrices les plus éloignées de la face extérieure de la plaque de lecture aient une surface plus grande que les premières bandes conductrices. La nécessité de prévoir un tel mécanisme de compensation complexifie également la fabrication de la plaque de lecture.

De l'état de la technique est également connu de :
- Tai-Hua Lin et Al : « Signal characteristics of a resistive-strip micromegas detector with an integrated two dimensional readout », Nuclear Instruments & Methods in Physics Research. Section A : Accelerators, spectrometers, Detectors, and associated equipment, vol. 797, 10/09/2014, pages 281-288,
- EP2562563A1.

L'article suivant décrit une plaque de lecture comportant un pavage de tuiles conductrice en forme de losange utilisé pour former des bandes conductrices qui s'étendent dans trois directions différentes : Belkacem A et Al : A new type of multiparticle imaging detector », Review of Scientific Instruments, AIP, Melville, NY, US, vol. 61, n°3, 1/03/1190, pages 945-952. Cette plaque de lecture ne permet de déterminer, sans ambiguïté, que la position de deux points d'impact simultanés. De plus, le dispositif décrit utilisant cette plaque est uniquement capable de détecter des ions lourds et ne fonctionne pas pour des particules cosmiques qui sont plus rares et qui produisent moins de charges électriques.

L'invention vise à remédier à ces inconvénients en proposant un détecteur plus simple à fabriquer et qui, en même temps, conserve les avantages du détecteur conventionnel décrit dans l'article de M. Byszweski. Elle a donc pour objet un tel détecteur gazeux conforme à la revendication 1.

Dans le détecteur revendiqué, étant donné que toutes les tuiles conductrices sont situées sur la même face avant de la couche diélectrique, elles peuvent toutes être fabriquées simultanément et cela quelle que soit la bande conductrice à laquelle elles appartiennent. De plus, la plus petite dimension des tuiles étant supérieure à 300 µm, cela permet leur fabrication à l'aide de procédé conventionnel de photolithographie. Par exemple, toutes les tuiles de toutes les bandes peuvent être fabriquées simultanément par gravure humide ou sèche ou semi-humide d'une même couche de métallisation déposée sur la face avant de la couche diélectrique. Ainsi, la fabrication de la plaque de lecture est simplifiée, ce qui simplifie également la fabrication du détecteur.

Dans le détecteur revendiqué, toutes les tuiles sont situées à la même distance de la face extérieure et elles présentent toutes la même surface. Dans ces conditions, les tuiles sont exposées de la même manière et par conséquence la sensibilité de chaque tuile en réponse à une avalanche de charges secondaires est la même quelle que soit la bande conductrice à laquelle elle appartient. Il n'est donc pas nécessaire de prévoir un mécanisme de compensation des différences de sensibilité entre les bandes conductrices. Cela participe également à la simplification de la fabrication de la plaque de lecture.

Les modes de réalisation de ce détecteur peuvent comporter une ou plusieurs des caractéristiques des revendications dépendantes.

L'invention a également pour objet une plaque de lecture pour le détecteur gazeux revendiqué.

Les modes de réalisation de cette plaque de lecture peuvent comporter une ou plusieurs des caractéristiques des revendications dépendantes.

Ces modes de réalisation de la plaque de lecture présentent en outre les avantages suivants :
- La couche résistive permet de répartir les charges de l'avalanche de charges secondaires sur une plus grande surface. Cela permet d'utiliser des tuiles dont les plus petites dimensions sont encore plus grandes. Des tuiles de dimensions plus grandes simplifient encore plus la fabrication de la plaque de lecture.
- Le losange est la forme de tuile qui, pour une plus petite dimension donnée de la tuile et pour le même nombre de bandes conductrices connectées, permet d'obtenir la meilleure résolution spatiale dans le cas où l'on souhaite obtenir des bandes conductrices qui se croisent dans seulement trois directions différentes. En effet, la résolution sur la position du point d'impact avec la particule élémentaire est d'autant meilleure que la surface de la tuile est petite pour une même plus petite dimension de cette tuile.
- Le carré est la forme de tuile qui, pour une plus petite dimension donnée de la tuile, permet d'obtenir la meilleure résolution spatiale dans le cas où l'on souhaite obtenir des bandes conductrices qui se croisent seulement dans quatre directions différentes.
- Le triangle est la forme de tuile qui, pour une plus petite dimension donnée de la tuile, permet d'obtenir la meilleure résolution spatiale dans le cas où l'on souhaite obtenir des bandes conductrices qui se croisent dans trois directions différentes et qui, dans chacune de ces directions, superpose deux bandes conductrices différentes qui s'étendent le long de la même ligne. L'agencement de tuile en forme de triangle permet de déterminer, sans ambiguïté, la position d'au moins quatre points d'impact simultanés. Enfin, en court-circuitant de façon appropriée les extrémités des bandes de tuiles triangulaires, il est possible, à partir de la même plaque, d'obtenir des bandes où les tuiles sont de forme carrée ou en forme de losange ou d'hexagone ou autres formes géométriques formées par la juxtaposition de plusieurs tuiles triangulaires.

L'invention sera mieux comprise à la lecture de la description qui va suivre, donnée uniquement à titre d'exemple non limitatif et faite en se référant aux dessins sur lesquels :
- La figure 1 est une illustration schématique, partiellement en coupe verticale, d'un premier mode de réalisation d'un détecteur gazeux de particules élémentaires ;
- La figure 2 est une illustration schématique et partielle, en coupe verticale, d'une plaque de lecture du détecteur de la figure 1 ;
- La figure 3 est une illustration schématique et partielle d'un agencement de tuiles mis en œuvre dans la plaque de lecture de la figure 2 ;
- La figure 4 est une illustration schématique et en coupe verticale d'un deuxième mode de réalisation d'un détecteur gazeux de particules élémentaires ;
- Les figures 5, 6, 7, 8, 9 et 10 illustrent d'autres exemples d'agencements alternatifs possibles pour des tuiles utilisées dans une plaque de lecture telle que la plaque de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

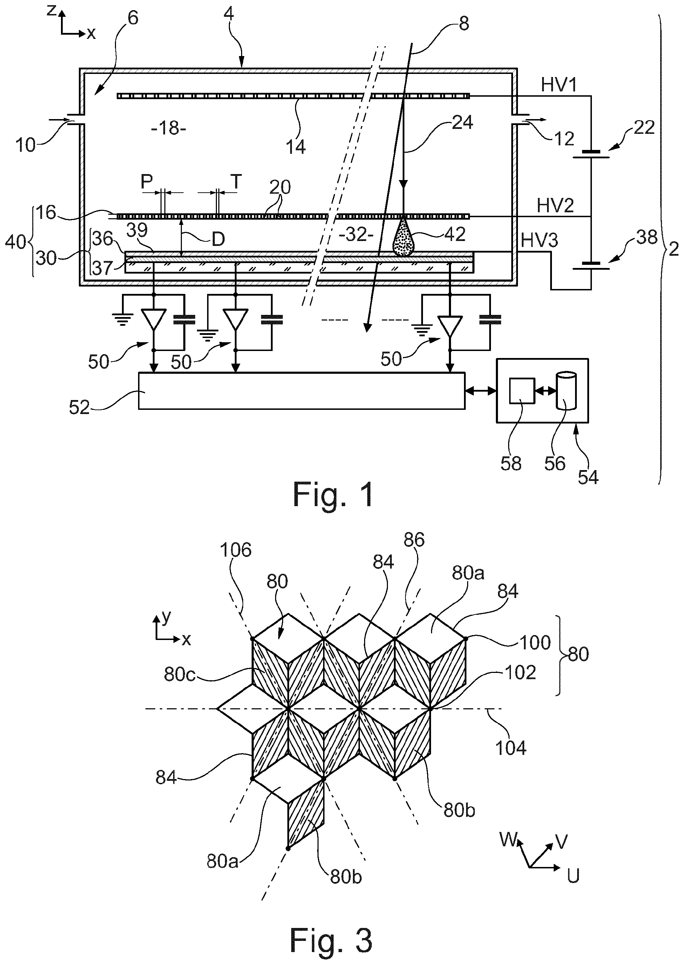

La figure 1 représente un détecteur gazeux 2 de particules élémentaires. Dans ce mode de réalisation particulier, le détecteur 2 est un détecteur connu sous le terme de MICROMEGAS (« MICRO MEsh GAseous Structure chamber »). L'architecture générale et le principe de fonctionnement d'un tel détecteur sont connus. Par exemple, le lecteur peut se référer à la demande WO2010091695. Ici, seuls les détails nécessaires pour comprendre l'invention sont décrits en détail.

Dans cette demande, les figures sont orientées par rapport à un repère orthogonal XYZ, où Z est la direction verticale qui pointe vers le haut.

Le détecteur 2 comporte une chambre 4 à gaz contenant un gaz 6 apte à s'ioniser lorsqu'il est traversé par une particule élémentaire telle qu'un photon ou un proton. Sur la figure 1, la trajectoire 8 d'une telle particule élémentaire est représentée par une flèche. La chambre 4 a des orifices 10 et 12 pour, respectivement, l'admission et l'évacuation du gaz 6 à l'intérieur de cette chambre. Le sens de circulation du gaz 6 à l'intérieur de la chambre 4 est représenté par des flèches situées au niveau des orifices 10 et 12.

La chambre 4 comporte une électrode supérieure 14 et une grille horizontale 16, séparée l'une de l'autre par une lame 18 du gaz 6. L'électrode 14 et la grille 16 s'étendent chacune dans un plan horizontal respectif et sont situées en vis-à-vis l'une de l'autre dans la direction Z. L'épaisseur de la lame 18 est généralement supérieure ou égale à 1 mm ou 2 mm et souvent inférieure à 1 cm ou 5 cm. La grille 16 est transpercée par une multitude de trous traversants 20 de diamètre T disposés à intervalles P réguliers dans les directions X et Y. Le diamètre T est typiquement inférieur à 100 µm ou 50 µm et l'intervalle P est par exemple égal au diamètre T à ±50 % près ou ±30 % près. La grille 16 est entièrement réalisée dans un matériau électriquement conducteur ou résistif.

Le détecteur 2 comporte une source d'alimentation 22 raccordée à l'électrode 14 et à la grille 16 qui applique des potentiels HV1 et HV2, respectivement, sur l'électrode 14 et la grille 16. Le potentiel HV2 est supérieur au potentiel HV1 de manière à générer un premier champ électrique à travers la lame 18 qui propulse vers la grille 16 la charge primaire qui apparaît au niveau du point d'impact entre une molécule du gaz 6 et la particule élémentaire. Par exemple, le champ électrique à l'intérieur de la lame 18 est compris entre 1 kV/cm et 5 kV/cm.

Sur la figure 1, la trajectoire 24 d'une telle charge primaire est représentée par une flèche verticale dirigée vers la grille 16. Ici, la charge primaire est un électron arraché à l'une des molécules du gaz 6. Ainsi, au niveau de chaque point d'impact entre la particule élémentaire et le gaz 6, il apparaît des électrons et des ions. Normalement, le long de la trajectoire 8, il existe plusieurs points d'impacts successifs. Ainsi, la détermination de la position de ces différents points d'impact successifs permet de reconstruire la projection de la trajectoire 8 de la particule élémentaire sur le plan X. De plus, les instants auxquels se produisent ces différents points d'impact peuvent être relevés. Dans ce cas, il est alors possible d'en déduire la trajectoire de la particule connaissant la vitesse de dérive des électrons primaires. Un tel principe de fonctionnement est décrit dans l'article suivant : H J Hilke : « Time projection chambers », IOP Publishing Ltd, Reports on Progress in Physics, Volume 73, Number 11, 6 Octobre 2010.

La chambre 4 comporte aussi une plaque de lecture 30 située sous la grille 16 et à une distance D de cette grille 16. La distance D est cinq ou dix fois plus petite que la distance verticale qui sépare l'électrode 14 de la grille 16. Typiquement, la distance D est comprise entre 15 µm et 200 µm. Une lame 32 du gaz 6 s'étend entre la grille 16 et la plaque 30.

La plaque 30 comporte en outre :
- une couche résistive 36 qui s'étend horizontalement en vis-à-vis de la grille 16, et
- des bandes conductrices 37 qui s'étendent horizontalement sous la couche résistive 36.

Cette couche résistive 36 est ici directement en contact avec la lame 32 et électriquement raccordée à une source d'alimentation 38. Dans ce mode de réalisation, la face de la couche 36 directement en contact avec la lame 32 forme une face extérieure 39 de la plaque 30. La source d'alimentation 38 est capable d'appliquer sur la couche résistive 36 un potentiel HV3 de sorte que la différence de potentiels HV3 - HV2 est cinq ou dix fois plus grande que la différence de potentiels HV2 - HV1. Par conséquent, le champ électrique à travers la lame 32 est cinq ou dix fois plus grand que celui qui traverse la lame 18.

Par exemple, le champ électrique à travers la lame 32 est supérieur ou égal à 10 kV/cm ou 50 kV/cm.

L'association de la grille 16, de la lame 32, de la couche résistive 36 et de la source d'alimentation 38 forme un dispositif d'amplification 40 des charges primaires qui traversent la grille 16. Plus précisément, chaque fois qu'une charge primaire traverse l'un des trous 20, elle est accélérée par le champ électrique qui règne dans la lame 32. Elle ionise alors des nouvelles molécules du gaz 6, ce qui génère, à partir de la charge primaire, plusieurs charges secondaires. Ces charges secondaires sont elles-mêmes accélérées et ionisent à leur tour de nouvelles molécules du gaz 6. Cette réaction en chaîne produit ce qui est appelé « une avalanches de charges secondaires ». Cette réaction est déclenchée par la charge primaire qui a traversé le trou 20. Sur la figure 1, une avalanche 42 déclenchée par la charge primaire qui suit la trajectoire 24 a été représentée.

La taille de l'avalanche 42 est petite, c'est-à-dire inférieure à 500 µm et, typiquement, inférieure à 200 µm ou 100 µm. Ici, la taille d'une avalanche de charges secondaires est la longueur du plus grand côté du rectangle dessiné sur la face extérieure de la plaque de lecture et qui contient 90 % des points d'impact entre les charges secondaires de l'avalanche 42 et la face extérieure 39.

L'une des fonctions de la couche résistive 36 est aussi de répartir les charges secondaires de l'avalanche 42 sur une zone de répartition plus grande. Typiquement, la taille de cette zone de répartition est M fois plus grande que la taille de l'avalanche, où M est généralement compris entre 2 et 10 et le plus souvent entre 2 et 4 ou 2 et 5. La taille de la zone de répartition est la longueur du plus grand côté du rectangle dessiné sur la face extérieure de la plaque de lecture et qui contient 90 % des charges secondaires de l'avalanche 42. A cet effet, la couche résistive 36 est une couche pleine qui s'étend continûment le long de toute la face extérieure 39 de la plaque 30. De préférence, elle est dépourvue de trou et ne forme qu'un seul bloc de matière. L'épaisseur de la couche résistive 36 est uniforme et faible, c'est-à-dire généralement inférieure à 50 µm ou 20 µm. Son épaisseur est également typiquement supérieure à 1 µm ou 5 µm. Sa résistivité de surface, connue sous le terme anglais de « sheet resistivity » ou « surface resistivity », à 20°C est comprise entre 10 kQ/carré et 100 MΩ/carré. De préférence, sa résistivité de surface est supérieure ou égale à 100 kQ/carré ou 1 MΩ/carré et, avantageusement, inférieure à 10 MΩ/carré.

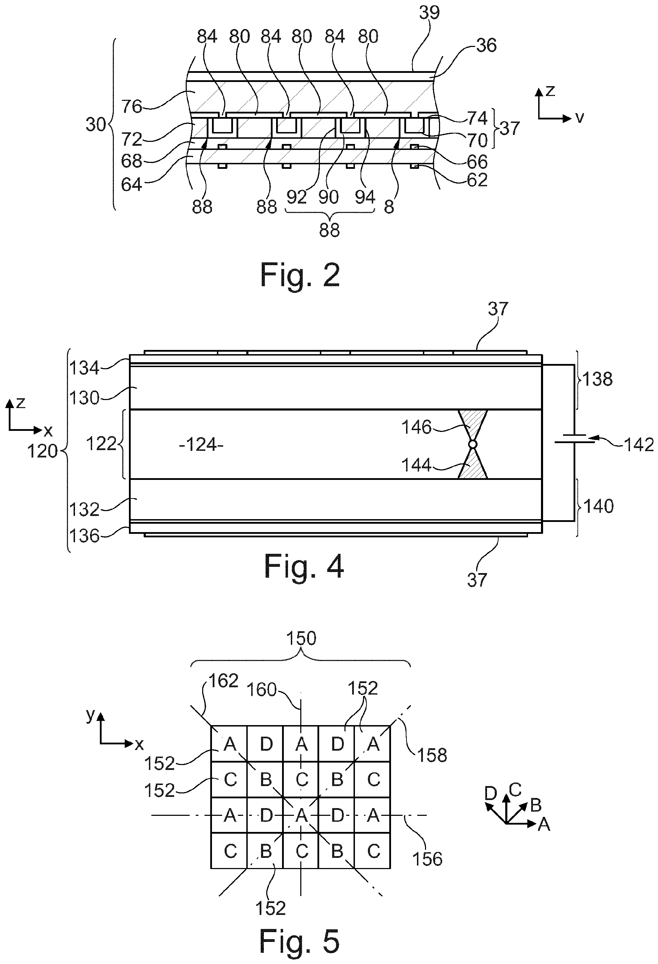

L'agencement des bandes 37 est décrit plus en détail en référence aux figures 2 et 3.

Par couplage capacitif entre la couche résistive 36 et les bandes conductrices 37, les charges secondaires reçues par la couche résistive 36 engendrent une variation correspondante de la charge électrique de certaines bandes conductrices 37. Les bandes conductrices 37 dont la charge varie sont situées, dans la direction Z, sous la zone de répartition des charges secondaires de l'avalanche 42.

Chaque bande 37 est électriquement isolée des autres bandes conductrices 37 présentes dans la plaque 30. Chaque bande 37 s'étend principalement horizontalement depuis une extrémité distale jusqu'à une extrémité proximale. Les extrémités distale et proximale de chaque bande 37 sont situées sur un bord de la plaque 30. L'extrémité distale est, par exemple, raccordée à une résistance ou laissée libre. L'extrémité proximale est raccordée, par l'intermédiaire d'un amplificateur électrique 50, à une entrée respective d'un capteur 52 de charges électriques.

Pour simplifier la figure 1, les bandes conductrices 37 sont schématiquement représentées par une seule couche et seuls trois amplificateurs 50 ont été représentés.

Le capteur 52 est capable de mesurer une grandeur physique représentative du nombre de charges électriques présentes sur chacune des bandes conductrices 37. À cet effet, le capteur 52 comporte autant d'entrées que de bandes conductrices 37. Dans ce mode de réalisation, le capteur 52 mesure rapidement la charge électrique présente sur chacune des bandes conductrices 37. La mesure de la quantité de charges électriques sur une bande peut consister :
- à signaler le franchissement d'un seuil prédéterminé par la quantité de charges électriques, ou
- à systématiquement générer une grandeur électrique représentative de la quantité de charges électriques actuellement présentes sur la bande conductrice.

Le détecteur 2 comporte aussi une unité de traitement 54 raccordée au capteur 52. L'unité de traitement 54 est capable d'acquérir les mesures du capteur 52. Ensuite, l'unité 54 détermine automatiquement, à partir de ces mesures acquises et de l'agencement connu des bandes conductrices 37, la position du point d'impact entre la particule élémentaire et le gaz 6 qui s'est produit à l'intérieur de la lame 18. Ici, l'unité de traitement 54 peut aussi être capable de relever les instants auxquels se produisent ces points d'impact et donc de déterminer la trajectoire de la particule élémentaire. Ces traitements sont réalisés de façon conventionnelle. Ils ne sont donc pas décrits ici plus en détail. À cet effet, l'unité de traitement 54 comporte :
- une mémoire 56, et
- un microprocesseur 58 programmable apte à exécuter des instructions enregistrées dans la mémoire 56.

La mémoire 56 comporte ici l'ensemble des instructions et des données nécessaires pour déterminer la position des points d'impact.

La figure 2 représente la plaque 30 en coupe verticale le long d'une direction V horizontale. La plaque 30 comporte un empilement, immédiatement les unes sur les autres, de couches horizontales. Ces couches horizontales empilées sont les suivantes, en allant du bas vers le haut dans la direction Z :
- une couche inférieure de métallisation 62,
- une première couche diélectrique 64,
- une première couche de métallisation intermédiaire 66,
- une deuxième couche diélectrique 68,
- une deuxième couche de métallisation intermédiaire 70,
- une troisième couche diélectrique 72,
- une couche de métallisation supérieure 74 déposée sur la face avant de la couche diélectrique 72,
- une quatrième couche diélectrique 76, et
- la couche résistive 36.

Par couche diélectrique, on désigne une couche horizontale dont plus de 90 % du volume est réalisé en matériau diélectrique. Un matériau diélectrique est un matériau dont la résistivité à 20°C est supérieure ou égale à 10¹² Ω.m et, de préférence, supérieure ou égale à 10¹⁴ Ω.m ou 10¹⁶ Ω.m. Généralement, la résistivité d'un matériau diélectrique à 20°C est inférieure à 10²⁸ Ω.m.

Les couches de métallisation 62, 66, 70 et 74 sont entièrement réalisées dans un matériau électriquement conducteur. Par matériau électriquement conducteur, on désigne ici un matériau dont la résistivité à 20°C est inférieure à 10⁻² Ω.m et, de préférence, inférieure à 10⁻⁵ Ω.m ou 10⁻⁶ Ω.m. Généralement, la résistivité d'un matériau électriquement conducteur à 20°C est supérieure à 10⁻¹⁰ Q.m. Par exemple, les couches de métallisation sont réalisées en cuivre.

Comme cela est décrit plus en détail en référence à la figure 3, la couche de métallisation 74 est structurée pour former des tuiles horizontales 80 séparées horizontalement mécaniquement les unes des autres par des interstices 84. Chaque tuile 80 est complètement entourée par un interstice 84. Les interstices 84 sont remplis d'un matériau diélectrique, par exemple, identique à celui de la couche diélectrique 76. Ainsi, il n'existe pas de connexion électrique, réalisée dans la couche 74, qui raccorde électriquement deux tuiles 80 entre elles. Les tuiles 80 sont toutes identiques les unes aux autres. En particulier, chaque tuile 80 se déduit d'une autre tuile 80 seulement par une translation horizontale éventuellement combinée à une rotation autour d'un axe vertical. Chaque tuile a la forme d'un polygone dont tous les côtés ont la même longueur.

La couche diélectrique 76 est entièrement formée en matériau diélectrique. L'épaisseur de la couche 76 est, par exemple, comprise entre 50 µm et 100 µm. L'association d'une tuile 80, de la couche diélectrique 76 et de la couche résistive 36 forme un condensateur. Ainsi, si des charges secondaires percutent la couche résistive 36 au-dessus où à proximité d'une tuile 80, des charges de signe opposé aux charges secondaires apparaissent dans cette tuile 80 conformément au fonctionnement d'un condensateur. Étant donné que les tuiles 80 sont toutes identiques et à la même distance de la face extérieure 39, les capacités de chacun des condensateurs ainsi formés sont identiques. Dès lors, la sensibilité de chaque tuile 80 à la présence d'une charge électrique secondaire dans la zone de répartition en vis-à-vis de la couche résistive 36 est égale à celles des autres tuiles 80.

La plus petite dimension d'une tuile 80 est supérieure ou égale à 300 µm ou 500 µm et, généralement, supérieure à 1 mm. Par « plus petite dimension d'une tuile», on désigne ici la longueur du plus petit côté du rectangle de plus petite surface qui contient entièrement la tuile 80. Par « plus grande dimension d'une tuile », on désigne la longueur du grand côté de ce rectangle. La plus grande dimension d'une tuile 80 est strictement inférieure et, de préférence, deux ou trois fois plus petite que la taille de la zone de répartition de l'avalanche 42. Par exemple, la plus grande dimension d'une tuile 80 est généralement inférieure à 3 cm ou 1 cm.

Pour former une bande conductrice 37 qui s'étend principalement le long d'une ligne horizontale 86 (Figure 3) parallèle à la direction V, toutes les tuiles situées les unes derrière les autres le long de cette ligne 86 sont raccordées électriquement entre en série par l'intermédiaire de connexions électriques 88. Les connexions 88 sont réalisées sous la face avant de la couche diélectrique 72. Ici, chaque connexion 88 qui raccorde électriquement une première et une deuxième tuiles 80 immédiatement consécutive le long de la ligne 86 comporte :
- un piste conductrice 90 réalisée dans l'une des couches de métallisation 62, 66, ou 70 et qui s'étend horizontalement entre une première extrémité située sous la première tuile 80 et une deuxième extrémité située sous la deuxième tuile 80, et
- des plots conducteurs 92, 94 verticaux, connus sous le terme de « via », qui traversent chacun une ou plusieurs des couches 64, 68 et 72 pour raccorder électriquement les première et deuxième tuiles, respectivement, aux première et deuxième extrémités de la piste 90.

Ici, dans le cas particulier des tuiles 80 alignées le long de la ligne 86, la piste 90 est réalisée dans la couche de métallisation 70. Les plots 92, 94 traversent donc uniquement la couche diélectrique 72. Les couches de métallisation 62 et 66 sont utilisées pour réaliser les pistes électriques, correspondant à la piste 90, pour les bandes conductrices 37 qui s'étendent, respectivement, parallèlement à d'autres directions U et W. Ici, la direction U est parallèle à la direction X et les directions V et W sont décalées angulairement de, respectivement, 60° et 120° par rapport à la direction U.

La figure 3 représente un premier exemple d'agencement possible les unes par rapport aux autres des tuiles 80 sur la face avant horizontale de la couche diélectrique 72. Dans ce mode de réalisation, chaque tuile 80 a la forme d'un losange dont les deux sommets 100, 102 les plus pointus sont situés à chaque extrémité de la grande diagonale de ce losange. L'angle au niveau des sommets 100 et 102 est égal à 60°.

Sur la figure 3, les interstices 84 entre les tuiles 80 sont représentés par des traits.

Les tuiles 80 sont agencées les unes par rapport aux autres de manière à former un pavage, également connu sous le terme anglais de « tessallation », de la face avant de la couche diélectrique 72. Ici, les tuiles 80 sont réparties sur la face avant de la couche diélectrique 72 de manière à former un pavage périodique, c'est-à-dire un pavage qui peut être entièrement construit en répétant périodiquement un même motif dans au moins deux directions horizontales différentes. Par exemple, ici, le motif répété est un hexagone formé par trois tuiles 80 adjacentes qui portent, respectivement, les références numériques 80a, 80b et 80c sur la figure 3. Les grandes diagonales de ces tuiles 80a, 80b et 80c sont, respectivement, parallèles aux directions U, V et W. Dans le motif répété, ces trois tuiles 80a, 80b et 80c ont un sommet commun. Dans le cas du pavage de la figure 3, le motif est répété périodiquement dans les directions U, V et W.

Sur la figure 3, pour faciliter l'identification des tuiles 80a, 80b et 80c, chaque tuile 80a, 80b et 80c est remplie avec une texture respective.

Toutes les tuiles 80b dont les grandes diagonales sont alignées sur la ligne 86 sont électriquement raccordées en série les unes aux autres depuis un bord du pavage jusqu'au bord opposé pour former une bande conductrice 37 qui s'étend parallèlement à la direction V. Les autres tuiles 80b sont électriquement raccordées les unes aux autres de façon similaire pour former une pluralité de bandes conductrices 37 qui s'étendent parallèlement à la direction V. Les différentes bandes conductrices 37 parallèles à la direction V ainsi formées sont électriquement isolées les unes des autres.

De façon similaire, les tuiles 80a dont les grandes diagonales sont alignées les unes après les autres le long d'une ligne 104 parallèle à la direction U sont toutes électriquement raccordées en série les unes aux autres par des connexions 88. En procédant ainsi pour toutes les tuiles 80a, on forme une pluralité de bandes conductrices 37 électriquement isolées les unes des autres et toutes parallèles à la direction U.

Enfin, toujours de façon similaire à ce qui a été décrit pour les tuiles 80a et 80b, les tuiles 80c alignées les unes derrière les autres le long d'un même ligne 106 parallèle à la direction W sont électriquement raccordées en série les unes aux autres par des connexions 88. En procédant ainsi pour toutes les tuiles 80c, on forme une pluralité de bandes conductrices 37 électriquement isolées les unes des autres et toutes parallèles à la direction W.

À cause des dimensions et de l'agencement des tuiles 80, celles-ci peuvent être gravées dans la couche de métallisation 74 en utilisant des procédés de gravure simple comme la photolithographie. De plus, étant donné que les charges de l'avalanche 42 s'étalent systématiquement au-dessus d'au moins trois tuiles 80 contiguës, l'avalanche 42 provoque une variation de la charge électrique d'au moins trois bandes conductrices 37 qui s'étendent chacune dans trois directions différentes. Ainsi, même si deux avalanches 42 touchent simultanément la plaque 30 à deux endroits différents, l'unité de traitement 54 est capable de déterminer sans ambiguïté la position des deux points d'impact correspondants pour deux points d'impacts distants de plus que la plus grande dimension d'une tuile.

Ici, la sensibilité de chaque bande conductrice 37 est identique à celle des autres bandes conductrices 37. Ainsi, il n'est pas nécessaire de prévoir dans la plaque 30 des moyens de compensation d'écart de sensibilité entre les différentes bandes conductrices 37.

Enfin, le nombre d'entrées du capteur 52 nécessaire pour mesurer la position du point d'impact d'une particule élémentaire est beaucoup plus petit que dans le cas où chaque tuile 80 serait électriquement isolée de toutes les autres tuiles 80 et directement raccordée à une entrée respective du capteur 52. En effet, dans ce dernier cas, le capteur 52 doit comporter autant d'entrées que de tuiles 80 alors que dans le mode de réalisation décrit ici, il comporte seulement une entrée par bande conductrice 37.

Le fonctionnement du détecteur 2 est conventionnel. Par exemple, il fonctionne comme décrit dans l'article suivant : R. Santonico, and R. Cardarelli : « Development of resistive plate counters », nim187-1981, pp377-380, 0029-554X(81)90363-3.

La figure 4 représente un détecteur 120 de particules élémentaires connus sous l'acronyme RPC (« Resistive Plate Chamber »). L'architecture et les principes généraux de fonctionnement d'un tel détecteur sont bien connus. Par exemple, le lecteur peut se référer à l'article suivant pour les détails de fabrication et d'utilisation d'un tel détecteur : M. Bedjidian et al. : « Performance of Glass Resistive Plate Chambers for a high granularity semi-digital calorimeter », JINST 6 (2011) P02001.

Ici, seuls les détails nécessaires à la compréhension sont décrits. Le détecteur 120 comporte :
- une chambre 122 à gaz renfermant un gaz ionisable 124, par exemple, identique au gaz 6,
- des plaques hautement résistives 130 et 132 qui forment les parois, respectivement, supérieure et inférieure de la chambre 122,
- une électrode supérieure 134 qui recouvre toute la face arrière de la plaque 130,
- une électrode inférieure 136 qui recouvre toute la face arrière de la plaque 132,
- une plaque de lecture supérieure 138 et une plaque de lecture inférieure 140, et
- une source d'alimentation 142.

Les plaques hautement résistives 130 et 132 sont entièrement réalisées dans un matériau hautement résistif. Par matériau hautement résistif, on désigne ici un matériau dont la résistivité électrique à 20°C est supérieure à 10⁶ Ω.m et, de préférence, supérieure ou égale à 10⁷ Ω.m ou 10¹⁰ Ω.m. Généralement, la résistivité électrique à 20°C de ce matériau hautement résistif est strictement inférieure à 10¹² Ω.m. Typiquement, le matériau hautement résistif est du verre ou en plastique tel que le Bakelite.

L'épaisseur des plaques 130 et 132 est supérieure à 200 µm et souvent supérieure à 1 mm. Généralement, l'épaisseur des plaques 130 et 132 reste inférieure à 5 mm ou 3 mm. L'épaisseur de la lame de gaz 124 coincée entre les plaques 130 et 132 est typiquement supérieure ou égale à 1 mm ou 2 mm et généralement inférieure à 1 cm ou 5 cm.

L'électrode supérieure 134 est ici un film résistif. Ce film résistif est ici identique à la couche résistive 36. L'électrode inférieure 136 est également ici identique à la couche résistive 36.

Une couche diélectrique dont l'épaisseur, habituellement supérieure à 50 µm et inférieure à 300 µm, sépare les bandes conductrices de la plaque de lecture supérieure de l'électrode supérieure. Cette couche diélectrique correspond à la couche diélectrique 76 précédemment décrite. De façon similaire, une couche diélectrique sépare les bandes conductrices de la plaque de lecture inférieure de l'électrode inférieure.

Ici, on considère que les électrodes supérieure 134 et inférieure 136 appartiennent, respectivement, aux plaques de lecture 138 et 140. Dans ces conditions, l'architecture des plaques de lecture 138 et 140 est identique, par exemple, à l'architecture de la plaque de lecture 30. Plus précisément, dans ces conditions, les électrodes 134 et 136 correspondent à la couche résistive 36 de la plaque 30 et la couche diélectrique de 50 µm à 300 µm d'épaisseur correspond à la couche diélectrique 76.

La source d'alimentation 142 applique une différence de potentiels entre les électrodes 134 et 136 apte, comme dans le cas du détecteur 2, à provoquer en réponse à l'apparition d'une charge primaire, à l'intérieur de la chambre 122, une avalanche 144 de charges secondaires chargées négativement et qui vient percuter l'électrode 136. Au niveau du point d'impact entre la particule élémentaire et une molécule du gaz 124, il apparaît non seulement une charge primaire négative, typiquement un électron, mais aussi une charge primaire positive, typiquement un ion correspondant à la molécule du gaz 124 à laquelle a été arraché l'électron. Ici, la différence de potentiels appliquée entre les électrodes 134 et 136 est telle que l'apparition de la charge primaire positive provoque également une avalanche 146 de charges secondaires positives. Contrairement à l'avalanche 144, l'avalanche 146 vient percuter l'électrode supérieure 134.

Ainsi, les plaques de lecture 138 et 140 permettent de déterminer la position du point d'impact à la fois à partir des positions des avalanches 144 et 146.

Pour simplifier la figure 4, les amplificateurs, le capteur de charges électriques et l'unité de traitement utilisés pour déterminer la position du point d'impact n'ont pas été représentés. Par exemple, ils sont identiques à ceux qui ont été décrits dans le cas du détecteur 2.

La figure 5 représente une plaque de lecture 150 identique à la plaque de lecture 30 sauf que les tuiles 80 sont remplacées par des tuiles 152. La plaque 150 est apte à être utilisée à la place de la plaque 30 dans le détecteur 2 ou 120.

Les tuiles 152 sont identiques aux tuiles 80 sauf que chaque tuile 152 a la forme d'un carré. Dans ce cas, qui ne fait pas partie de l'invention revendiquée, le motif répété périodiquement pour former le pavage périodique sur la face avant de la couche diélectrique 72 est un carré. Ce carré est répété périodiquement dans quatre directions différentes A, B, C et D. La direction A est ici parallèle à la direction X. Les directions B, C et D sont décalées angulairement par rapport à la direction A de, respectivement, 45°, 90° et 135°.

Les tuiles 152 sont raccordées électriquement les unes aux autres par des connexions similaires aux connexions 88 de manière à former des bandes conductrices qui s'étendent parallèlement aux quatre directions A, B, C et D. Sur la figure 5, le symbole « A » est inscrit à l'intérieur de chacune des tuiles 150 qui est utilisée pour former une bande conductrice qui s'étend parallèlement à la direction A. De façon similaire, les symboles « B », « C » et « D » ont été inscrits à l'intérieur des tuiles 152 utilisées pour former des bandes conductrices parallèles, respectivement, aux directions B, C et D.

Par exemple, à cet effet, parmi l'ensemble des tuiles 152 qui s'étendent le long d'une ligne 156 parallèle à la direction A, seule une tuile 152 sur deux est électriquement raccordées aux autres tuiles 152 de cet ensemble. Ainsi, une tuile appartenant à une autre bande conductrice est interposée entre chaque paire de tuiles 152 successives appartenant à la bande conductrice qui s'étend le long de la ligne 156. Dans ce mode de réalisation, la tuile 152 interposée appartient à une bande conductrice qui s'étend parallèlement à la direction D.

De façon similaire, parmi l'ensemble des tuiles 152 qui s'étendent le long d'une ligne 158 parallèle à la direction B, seule une tuile 152 sur deux est électriquement raccordées aux autres tuiles 152 de cet ensemble. Il en est de même pour les tuiles 152 qui forment les bandes conductrices qui s'étendent, respectivement, le long des lignes 160 et 162.

Ainsi, dans ce mode de réalisation, à l'exception des tuiles 152 situées sur les bords du pavage, chaque tuile 152 est uniquement entourée de tuiles 152 appartenant à d'autres bandes s'étendant dans trois autres directions différentes. Ceci est vrai quelle que soit la tuile 152 sélectionnée à l'intérieur du pavage. Ainsi, en réponse à un point d'impact entre une particule élémentaire et le gaz 6, au moins quatre bandes conductrices s'étendant chacune dans une direction différente sont chargées électriquement. Dès lors, la plaque 150 permet de déterminer, sans ambiguïté, la position de trois points d'impact simultanés si la distance séparant ces points d'impacts deux à deux est supérieure à la plus grande dimension de la tuile.

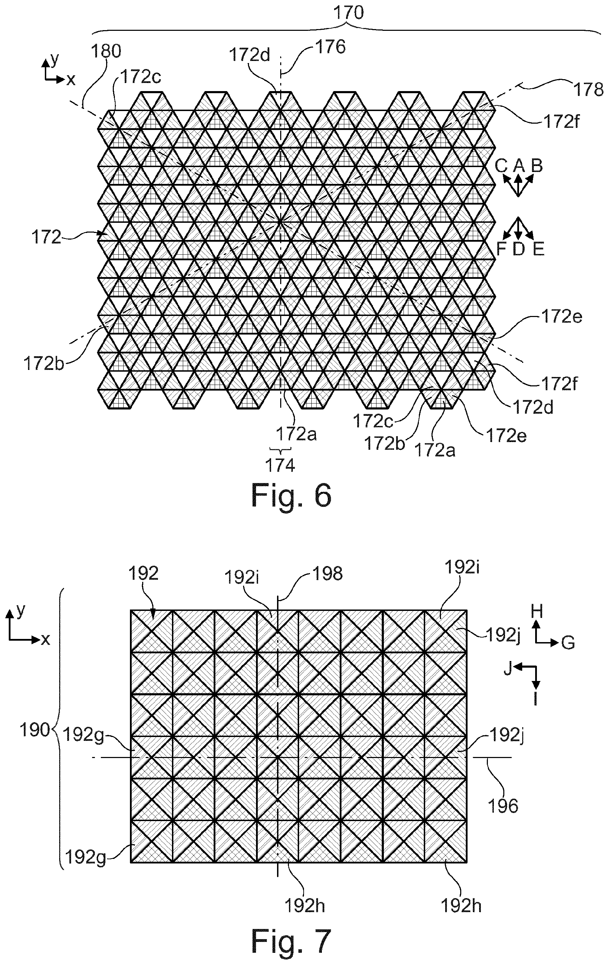

La figure 6 représente une plaque de lecture 170 identique à la plaque 30 sauf que les tuiles 80 sont remplacées par des tuiles 172. Les tuiles 172 sont identiques aux tuiles 80 sauf qu'elles ont chacune une forme triangulaire. Plus précisément, chaque tuile 172 est un triangle équilatéral ou isocèle. Dans ce mode de réalisation, les tuiles 172 sont raccordées électriquement les unes aux autres de manière à former des bandes conductrices 174 qui s'étendent parallèlement à six directions A, B, C, D, E et F. Les directions A et D sont parallèles à la direction Y. Les directions B et E sont décalées angulairement de -60° par rapport, respectivement, aux directions A et D. Les directions C et E sont décalées angulairement de +60° par rapport, respectivement, aux directions A et D.

Sur la figure 6, les références numériques 172a, 172b, 172c, 172d, 172e et 172f sont utilisées pour désigner les tuiles 172 qui appartiennent à des bandes conductrices parallèles, respectivement, aux directions A, B, C, D, E et F. Pour simplifier la figure 6 et les suivantes, chaque tuile qui appartient aux bandes conductrices qui s'étendent parallèlement à une direction prédéterminée est remplie avec une texture respective, ce qui permet d'identifier cette tuile dans la plaque 170, même sans référence numérique. Dans le pavage de la figure 6, le motif répété de façon périodique est un hexagone comportant un exemplaire de chacune des tuiles 172a, 172b, 172c, 172d, 172e et 172f. Dans ce motif, ces tuiles 172a, 172b, 172c, 172d, 172e et 172f partagent un sommet commun situé sur le centre géométrique de l'hexagone. Cette hexagone est répété périodiquement dans les directions A, B et C.

Les tuiles 172a et 172d sont alignées le long de lignes parallèles aux directions A et D telles que la ligne 176. Le long de la ligne 176, une tuile 172d est interposée entre chaque paire de tuiles 172a successives.

Les tuiles 172b et 172f sont alignées le long de lignes parallèles aux directions B et F telles que la ligne 178. Le long de la ligne 178, une tuile 172b est interposée entre chaque paire de tuiles 172f successives.

Les tuiles 172c et 172e sont alignées le long de lignes parallèles aux directions C et E telles que la ligne 180. Le long de la ligne 180, une tuile 172c est interposée entre chaque paire de tuiles 172e successives.

Grâce à cet agencement et à ce raccordement des tuiles 172 entre elles, chaque tuile 172, qui n'est pas située sur un bord du pavage, est immédiatement entourée de tuiles 172 appartenant à cinq bandes conductrices différentes. Dès lors, chaque point d'impact se traduit par une variation de la charge électrique d'au moins six bandes conductrices différentes. Avec la plaque 170, il est donc possible de déterminer, sans ambiguïté, la position de cinq points d'impact simultanés si la distance séparant ces points d'impacts deux à deux est supérieure à la plus grande dimension de la tuile.

La figure 7 représente une plaque de lecture 190 identique à la plaque de lecture 170 dans laquelle les tuiles 172 sont remplacées par des tuiles 192. Les tuiles 192 sont identiques aux tuiles 172 sauf qu'elles sont agencées différemment sur la face avant de la couche diélectrique 72. De plus, dans ce mode de réalisation, les tuiles 192 sont raccordées électriquement les unes aux autres de manière à former des bandes conductrices qui s'étendent parallèlement à quatre directions G, H, I et J. Les directions G et I sont parallèles à la direction X et les directions H et I sont décalées angulairement de 90° par rapport, respectivement, aux directions G et J. Sur la figure 7, les références numériques 192g, 192h, 192i et 192j sont utilisées pour désigner les tuiles 192 qui appartiennent à des bandes conductrices parallèles, respectivement, aux directions G, H, I et J. Dans ce pavage, le motif répété périodiquement est un carré composé d'un exemplaire de chacune des tuiles 192g, 192h, 192i et 192j. À l'intérieur de ce motif, ces tuiles 192g, 192h, 192i et 192j partagent un sommet commun situé au centre du carré.

Les tuiles 192g et 192j sont alignées le long de lignes parallèles aux directions G et J telles que la ligne 196. Le long de cette ligne 196, une tuile 192j est interposée entre chaque paire de tuiles 192g successives.

Les tuiles 192h et 192i sont alignées le long de lignes parallèles aux directions H et I telles que la ligne 198. Le long de la ligne 198, une tuile 192i est interposée entre chaque paire de tuiles 192h successives.

Grâce à cet agencement et à ce raccordement électrique des tuiles 192 entre elles, chaque tuile 192, qui n'est pas située sur le bord du pavage, est immédiatement entourée de tuiles 192 appartenant à trois bandes conductrices différentes. Dès lors, chaque point d'impact se traduit par une variation de la charge électrique d'au moins quatre bandes conductrices différentes. Il est donc possible de déterminer, sans ambiguïté, la position de trois points d'impact simultanés avec la plaque de lecture 190 si la distance séparant ces points d'impacts deux à deux est supérieure à la plus grande dimension de la tuile.

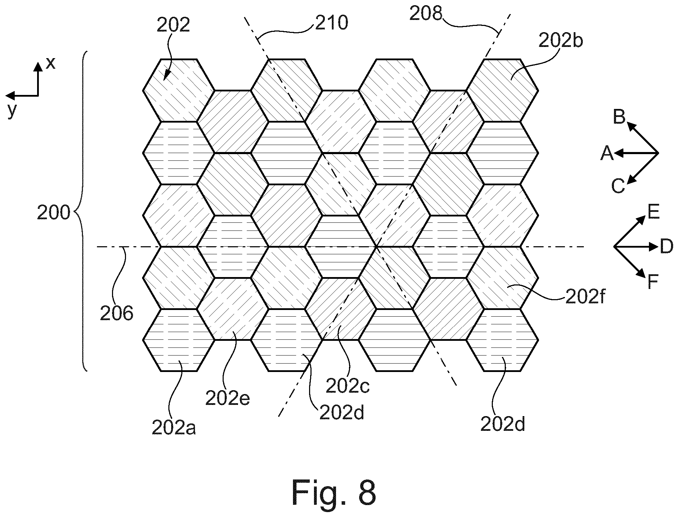

La figure 8 représente une plaque de lecture 200 identique à la plaque 30 sauf que les tuiles 80 sont remplacées par des tuiles 202. Les tuiles 202 sont identiques aux tuiles 80 sauf qu'elles sont de forme hexagonale. Dans ce mode de réalisation, qui ne fait pas partie de l'invention revendiquée, les tuiles 202 sont raccordées électriquement les unes aux autres de manière à former des bandes conductrices qui s'étendent parallèlement à six directions A, B, C, D, E et F. Ces directions sont les mêmes que celles définies pour la plaque 170. Sur la figure 8, les références 202a, 202b, 202c, 202d, 202e et 202f sont utilisées pour désigner les tuiles 202 qui appartiennent à des bandes conductrices parallèles, respectivement, aux directions A, B, C, D, E et F.

Les tuiles 202a et 202d sont alignées le long de lignes parallèles aux directions A et D telles que la ligne 206. Le long de la ligne 206, une tuile 202d est interposée entre chaque paire de tuiles 202a successives.

Les tuiles 202b et 202f sont alignées le long de lignes parallèles aux directions B et F telles que la ligne 210. Le long de la ligne 210, une tuile 202b est interposée entre chaque paire de tuiles 202f successives.

Les tuiles 202c et 202e sont alignées le long de lignes parallèles aux directions C et E telles que la ligne 208. Le long de la ligne 208, une tuile 202c est interposée entre chaque paire de tuiles 202e successives.

Grâce à cet agencement des tuiles 202, la plaque 200 permet de déterminer, sans ambiguïté, la position de cinq points d'impact simultanés si la distance séparant ces points d'impacts deux à deux est supérieure à la plus grande dimension de la tuile. Toutefois, pour des tuiles 202 présentant la même plus grande dimension que les tuiles 172, la résolution spatiale obtenue est meilleure avec le mode de réalisation de la figure 6. En effet, même si les tuiles 202 et 172 présentent la même plus grande dimension, la surface des tuiles 172 est plus petite ce qui améliore la résolution spatiale.

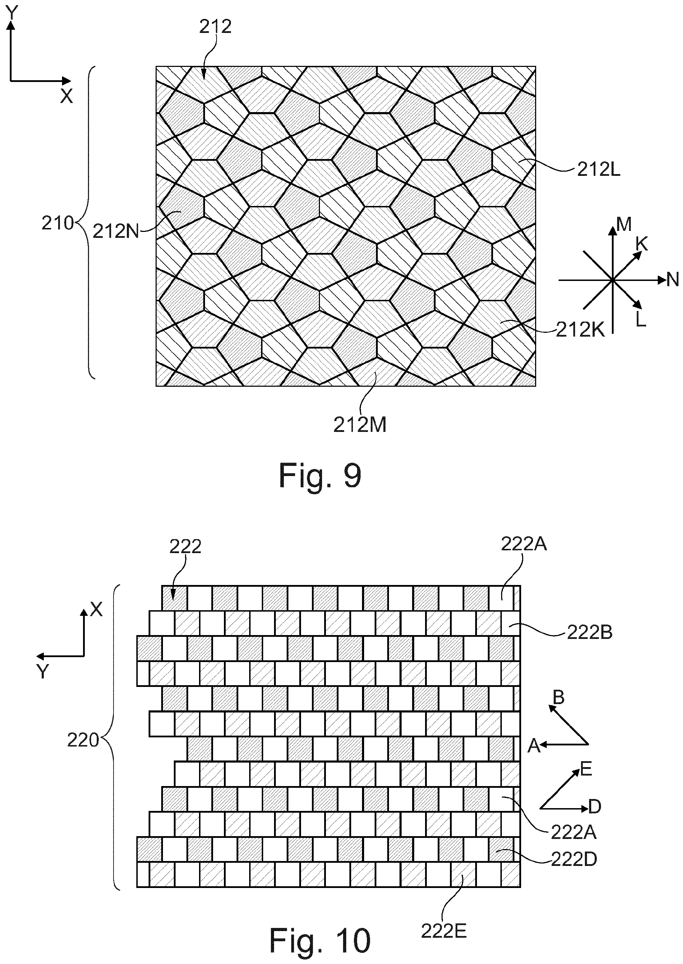

La figure 9 représente une plaque de lecture 210 identique à la plaque 30 sauf que les tuiles 80 sont remplacées par des tuiles 212. Les tuiles 212 sont identiques aux tuiles 80 sauf qu'elles sont de forme pentagonale. Dans ce mode de réalisation, qui ne fait pas partie de l'invention revendiquée, les tuiles 212 sont raccordées électriquement les unes aux autres de manière à former des bandes conductrices qui s'étendent parallèlement à quatre directions K, L, M et N. Les directions N et M sont parallèles, respectivement, aux directions X et Y. Les directions K et L sont décalées angulairement par rapport à la direction N, respectivement, de +45° et -45°. Sur la figure 9, les références 212K, 212L, 212M et 212N sont utilisées pour désigner les tuiles 212 qui appartiennent à des bandes conductrices parallèles, respectivement, aux directions K, L, M et N. Les connexions entre les tuiles 212 pour arriver à ce résultat se déduisent de l'agencement des tuiles 212 représenté sur la figure 9 et des explications précédentes données dans le cas d'autres formes de tuiles.

La figure 10 représente une plaque de lecture 220 identique à la plaque 150 sauf que les tuiles sont agencées différemment les unes par rapport aux autres. Sur cette figure, les tuiles carrées portent la référence générique 222. Dans ce mode de réalisation, qui ne fait pas partie de l'invention revendiquée, les tuiles 222 sont raccordées électriquement les unes aux autres de manière à former des bandes conductrices qui s'étendent parallèlement à quatre directions A, B, D et E. Les directions A, B, D et E sont les mêmes que celles définies dans le mode de réalisation de la figure 8. Sur la figure 10, les références 222A, 222B, 222D et 222E sont utilisées pour désigner les tuiles 222 qui appartiennent à des bandes conductrices parallèles, respectivement, aux directions A, B, D et E. Les connexions entre les tuiles 222 pour arriver à ce résultat se déduisent de l'agencement des tuiles 222 représenté sur la figure 10 et des explications précédentes données dans le cas d'autres formes de tuiles.

### Variantes du détecteur :

Le gaz utilisé dans la chambre à gaz peut être du propane, du méthane, de l'hélium, de l'isobutane, du xénon, de l'argon ou tout autre gaz ionisable par la traversée de la particule élémentaire à détecter.

L'épaisseur de la lame de gaz, comme par exemple l'épaisseur de la lame 18, peut être supérieure à 1 m comme dans le cas de la chambre à projection temporelle TPC décrite dans l'article suivant : H J Hilke : « Time projection chambers », IOP Publishing Ltd, Reports on Progress in Physics, Volume 73, Number 11, 6 Octobre 2010.

Le détecteur peut comporter plusieurs plaques de lecture comme dans le mode de réalisation de la figure 4. A l'inverse, l'une des plaques 138, 140 du détecteur 120 peut être omise.

D'autres modes de réalisation du capteur de charges électriques sont possibles. Par exemple, le capteur de charges électriques peut comporter un multiplexeur qui raccorde, en alternance dans le temps, l'extrémité de plusieurs bandes conductrices à l'entrée d'un même transducteur apte à convertir les charges électriques stockées sur cette bande conductrice actuellement raccordée en un signal électrique acquis par l'unité de traitement.

L'unité de traitement peut être réalisée différemment. Par exemple, le microprocesseur 58 est uniquement programmé pour enregistrer dans la mémoire 56 les mesures réalisées par le capteur 52. De préférence, pour chacune de ces mesures, l'instant où elle a été réalisée est aussi enregistré ainsi que l'identifiant de la bande conductrice sur laquelle les charges électriques ont été mesurées. Par contre, le microprocesseur 58 est incapable de mettre en œuvre les traitements nécessaires pour déterminer la position du point d'impact. Pour cela, l'unité de traitement comporte alors un ordinateur distinct apte à acquérir les mesures enregistrées dans la mémoire 56 et à les traiter automatiquement pour déterminer la position du point d'impact. Le traitement réalisé par l'ordinateur peut être déclenché bien après l'enregistrement des mesures dans la mémoire 56.

Les plaques de lecture décrites précédemment peuvent être utilisées dans d'autres types de détecteur gazeux. Par exemple, les plaques de lecture décrites ici peuvent aussi être mises en œuvre dans un détecteur gazeux connu sous l'acronyme de GEM (« Gas Electron Multiplier »). Par exemple, un mode de réalisation d'un tel détecteur gazeux est décrit en détail dans les demandes EP948803 et WO2014153668 A1.

En variante, le détecteur peut comporter une succession de plusieurs dispositifs d'amplification. Par exemple, dans le cas d'un détecteur MICROMEGAS, celui-ci peut comporter plusieurs grilles empilées les unes au-dessus des autres dans la direction Z et séparées les unes des autres par des lames respectives de gaz. Dans ce cas, une source d'alimentation supplémentaire est prévue pour appliquer des différences de potentiels entre ces différentes grilles, apte à générer une succession d'avalanches secondaires. De façon assez similaire, dans un détecteur GEM, il est également possible d'empiler les uns au-dessus des autres plusieurs dispositifs d'amplification de manière à augmenter le facteur d'amplification.

On peut également combiner les dispositifs d'amplification des détecteurs GEM et des détecteur MICROMEGAS en empilant, par exemple, le dispositif d'amplification d'un détecteur GEM au dessus de la grille du détecteur MICROMEGAS.

Dans le cas d'un détecteur RPC, la plaque 132, l'électrode 136 et la couche diélectrique 76 peuvent être omises. Dans ce cas, ce sont les bandes conductrices qui sont raccordées aux potentiels adéquats pour remplir la fonction de l'électrode 136. Dans ce mode de réalisation, les charges secondaires de l'avalanche 144 percutent alors directement les bandes conductrices. Ceci est rendu possible dans le cas d'un détecteur RPC car l'épaisseur de la lame de gaz 124 est beaucoup plus grande que dans le cas, par exemple, d'un détecteur MICROMEGAS ou d'un détecteur GEM. A cause de cela, la taille de l'avalanche 144 au niveau des bandes conductrices et au niveau des tuiles 80 est importante. Par taille importante, on désigne une taille supérieure ou égale à 1 mm ou 3 mm ou 5 mm. Dès lors, il est possible de se passer la couche résistive tout en étant capable de systématiquement répartir les charges secondaires sur plusieurs tuiles même si la plus petite dimension de ces tuiles est supérieure à 300 µm ou 500 µm.

Dans un autre mode de réalisation, seule l'électrode 136 est omise. Dans ce cas, les bandes conductrices sont raccordées aux potentiels adéquats pour remplir en plus la fonction de l'électrode 136.

Ce qui a précédemment été décrit dans le cas particulier d'un détecteur RPC à une seule lame de gaz s'applique aussi au cas des détecteurs RPC dans lesquels la chambre à gaz est divisée en plusieurs lames de gaz empilées les unes au-dessus des autres dans la direction Z. Dans ce cas, la chambre à gaz comporte en plus entre chacune de ces lames de gaz une lame de verre ou en plastique qui les sépare. Un tel agencement d'un détecteur RPC est connu sous le nom anglais de « multigap RPC » comme expliqué dans l'article suivante : E Cerron Zeballos et al : « A new type of resistive plate chamber : the multigap RPC », NIMA, volume 374, Issue1, 11 Mai 1996, pages 132-135.

### Variantes de la plaque de lecture :

En variante, la plaque de lecture n'est pas plane mais incurvée. Une telle conformation de la plaque de lecture peut être, par exemple, obtenue en courbant les plaques de lecture planes précédemment décrites. Par exemple, la plaque de lecture peut être cylindrique ou sphérique ou de toute autre forme.

Il est possible d'augmenter le nombre de bandes conductrices parallèles à une même direction en raccordant seulement une tuile sur trois ou seulement une tuile sur quatre ou plus parmi l'ensemble des tuiles alignées le long d'un même ligne parallèle à cette direction.

Dans un mode de réalisation simplifié, les bandes conductrices sont alignées parallèlement à seulement deux directions. Par exemple, lorsque les tuiles du pavage sont de forme carrée, pour cela, il suffit de raccorder en série une tuile sur deux parmi les tuiles alignées le long d'une même ligne parallèle à la direction X et une tuile sur deux parmi les tuiles alignée le long d'une même ligne parallèle à la direction Y. En faisant cela, on obtient des bandes conductrices parallèles aux deux directions orthogonales X et Y.
Pour un même pavage de la face avant de la couche diélectrique 72, il existe souvent plusieurs façons possibles pour connecter entre elles les tuiles de manières à former des bandes conductrices. Par exemple, d'autres schémas de connexions entre les tuiles 80 sont aussi possibles.

La tuile utilisée pour former le pavage périodique de la face avant de la couche 72 peut avoir de nombreuses formes différentes qui ne font pas partie de l'invention revendiquée, autres que celles déjà présentées. Par exemple, la tuile peut aussi avoir la forme d'un rectangle ou de tout autre polygone qui a, par exemple, tous ses côtés de même longueur. La tuile peut aussi avoir la forme d'un cercle ou d'un patatoïde. Dans ces derniers cas, les tuiles ne forment plus nécessairement un pavage de la face avant de la couche diélectrique 72 même si chaque tuile est répétée à intervalle régulier dans plusieurs directions différentes de manière à la répartir uniformément sur la face avant de la couche diélectrique 72. En effet, il est alors possible de concevoir un agencement des tuiles dans lequel chaque côté d'une tuile ne s'étend plus systématiquement parallèlement à un ou plusieurs côtés d'autres tuiles identiques. Il existe donc des interstices entre les tuiles dont les largeurs ne sont pas constantes. C'est par exemple systématiquement le cas avec des tuiles en forme de cercle.

La plaque de lecture peut comporter des couches supplémentaires. Par exemple, en variante, la plaque de lecture comporte une couche diélectrique supplémentaire déposée sur la couche résistive. Cette couche résistive supplémentaire peut être traversée par des petits plots conducteurs comme décrits, par exemple, dans la demande WO2010091695 de façon à augmenter la robustesse de la plaque de lecture vis-à-vis des décharges électriques.

En variante, et en particulier dans le cas d'un détecteur RPC, la couche résistive est directement déposée sur les bandes conductrices. Dans ce mode de réalisation, la couche diélectrique 76 est omise. Dans ce cas, la couche résistive est alors directement en contact électrique avec les tuiles et elle répartit les charges secondaires d'une avalanche sur plusieurs tuiles par diffusion de charges électriques.

L'extrémité de la bande conductrice opposée à l'extrémité raccordée au capteur 52 n'est pas nécessairement laissée flottante. Elle peut aussi être raccordée à un potentiel de référence.

## Revendications

1. Détecteur gazeux de particules élémentaires, ce détecteur comportant :
- une chambre (4 ; 122) à gaz renfermant un gaz (6 ; 124) apte à générer au moins une charge primaire lorsqu'il est traversé par la particule élémentaire à détecter, cette charge primaire étant soit un électron soit un ion,
- un dispositif (40 ; 124, 130, 132, 134, 136, 142) d'amplification apte, à partir de la charge primaire générée, à produire une avalanche (42 ; 144, 146) de charges secondaires,
- une plaque (170 ; 190) de lecture conforme à l'une quelconque des revendications 4 à 9.

2. Détecteur selon la revendication 1, dans lequel :
- le détecteur comporte :
• une électrode (14),
• une grille (16) entièrement réalisée en matériau électriquement conducteur et percée d'une multitude de trous (20) traversants, l'électrode et la grille étant séparées l'une de l'autre par une première lame (18) dudit gaz et la grille et les bandes conductrices étant séparées l'une de l'autre par une deuxième lame (32) dudit gaz,
• une première source (22) d'alimentation apte à appliquer une première différence de potentiels entre l'électrode et la grille adaptée pour propulser la charge primaire à travers l'un des trous de la grille, et
- le dispositif (40) d'amplification comporte la grille (16), la deuxième lame (32) de gaz ainsi qu'une seconde source (38) d'alimentation apte à créer à l'intérieur de la deuxième lame dudit gaz un champ électrique adapté pour générer l'avalanche de charges secondaires en réponse à la traversée de la grille par la charge primaire.

3. Détecteur selon la revendication 1, dans lequel :
- le détecteur comporte :
• une plaque (130) hautement résistive équipée d'une face avant directement en contact avec le gaz et d'une face arrière située du côté opposé à cette face avant, cette plaque hautement résistive étant réalisée dans un matériau dont la résistivité à 20°C est comprise entre 10⁶ Ω.cm et 10¹² Ω.cm,
• une première électrode (34) planaire située du côté de la face arrière de la plaque hautement résistive,
• une deuxième électrode (136) séparée de la plaque hautement résistive par une lame (124) dudit gaz, cette deuxième électrode étant choisie dans le groupe constitué d'un film résistif ou des bandes conductrices,
• une source (142) d'alimentation apte à appliquer entre les première et deuxième électrodes une différence de potentiels apte à générer l'avalanche (144, 146) de charges secondaires en réponse à l'apparition de la charge primaire à l'intérieur de la lame (124) dudit gaz,
- le dispositif d'amplification comportant les première et deuxième électrodes (134, 136), la lame (124) de gaz et la source (142) d'alimentation.

4. Plaque de lecture pour un détecteur gazeux dans laquelle la plaque (170 ; 190) de lecture comporte une face extérieure (39) agencée de manière à être percutée par une avalanche de charges secondaires et, dans l'ordre en se rapprochant de sa face extérieure, :
• une couche diélectrique (72) présentant une face avant tournée vers la face extérieure,
• des bandes conductrices (174; 192) s'étendant principalement parallèlement à la face avant dans au moins deux directions différentes, chaque bande conductrice s'étendant depuis une première extrémité jusqu'à une seconde extrémité électriquement raccordée à une entrée respective d'un capteur de charges électriques,
dans lequel les bandes conductrices comportent :
- des tuiles conductrices (172 ; 192) toutes identiques les unes aux autres et toutes situées à la même distance de la face extérieure, ces tuiles conductrices étant réparties sur la face avant de la couche diélectrique et étant mécaniquement séparées les unes des autres par un matériau diélectrique, la plus petit dimension de chaque tuile étant supérieure à 300 µm, la plus petite dimension d'une tuile étant égale à la longueur du plus petit côté du rectangle de plus petite surface qui contient entièrement cette tuile, et
- des connexions électriques (88), situées sous la couche diélectrique (72), qui raccordent électriquement en série des tuiles conductrices de manière à former lesdites bandes conductrices, ces connexions électriques étant agencées de manière à ce que chaque tuile conductrice appartienne à une seule bande conductrice et chaque côté d'une tuile est adjacent au côté d'une autre tuile appartenant à une autre bande conductrice,
**caractérisé en ce que** :
- chaque tuile (172; 192) est un triangle, et
- les connexions électriques raccordent électriquement en série :
• une tuile conductrice (172b ; 192i) sur deux parmi les tuiles conductrices alignées les unes après les autres le long d'une même première ligne (178 ; 198) parallèle à une première direction, ces tuiles conductrices raccordées électriquement entre elles étant dites « premières tuiles » et les autres tuiles conductrices (172f ; 192h), dites « deuxièmes tuiles », alignées les unes après les autres le long de la même première ligne (178 ; 198) étant également raccordées électriquement entre elles en série tout en restant électriquement isolées desdites premières tuiles,
• une tuile conductrice (172a ; 192j) sur deux parmi les tuiles conductrices alignées les unes après les autres le long d'une même deuxième ligne (176 : 196) parallèle à une deuxième direction décalée angulairement par rapport à la première direction, ces tuiles conductrices raccordées électriquement entre elles étant dites « troisièmes tuiles » et les autres tuiles conductrices (172d ; 192g), dites « quatrièmes tuiles », alignées les unes après les autres le long de la même deuxième ligne (176) étant également raccordées électriquement entre elles en série tout en restant électriquement isolées desdites troisièmes tuiles.

5. Plaque selon la revendication 4, dans laquelle chaque tuile conductrice est un polygone et les tuiles conductrices sont réparties sur la face avant de la couche diélectrique de manière à former un pavage périodique de cette face avant.

6. Plaque selon la revendication 4 ou 5, dans laquelle :
- la plaque de lecture comporte une couche résistive (36 ; 134, 136) qui recouvre toutes les bandes conductrices, cette couche résistive étant apte à élargir la répartition des charges secondaires de l'avalanche de manière à les répartir au-dessus de plusieurs bandes conductrices, et
- toutes les tuiles sont situées à la même distance de cette couche résistive.

7. Plaque selon la revendication 6, dans laquelle la plaque de lecture comporte une autre couche diélectrique (76) interposée entre la couche résistive (36 ; 134, 136) et les bandes conductrices (37 ; 174) et qui recouvre toutes les bandes conductrices, chaque empilement d'une bande conductrice avec cette autre couche diélectrique et la couche résistive formant ainsi un condensateur respectif.

8. Plaque selon l'une quelconque des revendications 4 à 7, dans laquelle :
- la deuxième directions est décalée angulairement de 60° par rapport à la première direction, et
- les connexions électriques raccordent électriquement en série une tuile conductrice (172c) sur deux parmi les tuiles conductrices alignées les unes après les autres le long d'une même troisième ligne (180) parallèle à une troisième direction décalée angulairement de 120° par rapport à la première direction, ces tuiles conductrices raccordées électriquement entre elles étant dites « cinquièmes tuiles » et les autres tuiles conductrices (172e), dites « sixièmes tuiles », alignées les unes après les autres le long de la même troisième ligne (180) étant également raccordées électriquement en série tout en restant électriquement isolées desdites cinquièmes tuiles.

9. Plaque selon l'une quelconque des revendications 4 à 7, dans laquelle la deuxième directions est décalée angulairement de 90° par rapport à la première direction.

## Patentansprüche

1. Elementarteilchen-Gasdetektor, wobei dieser Detektor umfasst:
- eine gasgefüllte Kammer (4; 122), die ein Gas (6; 124) umschließt, das geeignet ist, mindestens eine Primärladung zu generieren, wenn es von dem zu detektierenden Elementarteilchen durchquert wird, wobei diese Primärladung entweder ein Elektron oder ein Ion ist,
- eine Verstärkungsvorrichtung (40; 124, 130, 132, 134, 136, 142), die geeignet ist, ausgehend von der generierten Primärladung eine Lawine (42; 144, 146) von Sekundärladungen zu produzieren,
- eine Ausleseplatte (170; 190) nach einem der Ansprüche 4 bis 9.

2. Detektor nach Anspruch 1, wobei:
- der Detektor umfasst:
• eine Elektrode (14),
• ein Gitter (16), das vollständig aus elektrisch leitfähigem Material ausgeführt ist und mit einer Vielzahl von Durchgangslöchern (20) durchbohrt ist, wobei die Elektrode und das Gitter voneinander durch eine erste Schicht (18) des Gases getrennt sind und wobei das Gitter und die leitfähigen Streifen voneinander durch eine zweite Schicht (32) des Gases getrennt sind,
• eine erste Versorgungsquelle (22), die geeignet ist, eine erste Potenzialdifferenz zwischen der Elektrode und dem Gitter anzulegen, die dazu geeignet ist, die Primärladung durch eines der Löcher des Gitters zu treiben, und
- die Verstärkungsvorrichtung (40) das Gitter (16), die zweite Gasschicht (32) sowie eine zweite Versorgungsquelle (38) umfasst, die geeignet ist, im Inneren der zweiten Schicht des Gases ein elektrisches Feld zu erzeugen, das dazu geeignet ist, die Lawine von Sekundärladungen als Reaktion auf das Durchqueren des Gitters durch die Primärladung zu generieren.

3. Detektor nach Anspruch 1, wobei:
- der Detektor umfasst:
• eine hoch resistive Platte (130), die mit einer Vorderseite ausgestattet ist, die direkt in Kontakt mit dem Gas ist, und mit einer Rückseite, die auf der zu dieser Vorderseite entgegengesetzten Seite gelegen ist, wobei diese hoch resistive Platte aus einem Material ausgeführt ist, dessen Resistivität bei 20 °C zwischen 10⁶ Ω.cm und 10¹² Ω.cm beträgt,
• eine erste planare Elektrode (34), die auf der Seite der Rückseite der hoch resistiven Platte gelegen ist,
• eine zweite Elektrode (136), die von der hoch resistiven Platte durch eine Schicht (124) des Gases getrennt ist, wobei diese zweite Elektrode aus der Gruppe gewählt ist, die aus einer resistiven Folie oder leitfähigen Streifen besteht,
• eine Versorgungsquelle (142), die geeignet ist, zwischen den ersten und zweiten Elektroden eine Potenzialdifferenz anzulegen, die dazu geeignet ist, die Lawine (144, 146) von Sekundärladungen als Reaktion auf das Auftreten der Primärladung im Inneren der Schicht (124) des Gases zu generieren,
- wobei die Verstärkungsvorrichtung die ersten und zweiten Elektroden (134, 136), die Gasschicht (124) und die Versorgungsquelle (142) umfasst.

4. Ausleseplatte für einen Gasdetektor, wobei die Ausleseplatte (170; 190) eine Außenseite (39) umfasst, die so gestaltet ist, dass auf sie eine Lawine von Sekundärladungen aufprallt, und, in der Reihenfolge von der Außenseite aus:
• eine dielektrische Schicht (72), die eine Vorderseite aufweist, die zur Außenseite gewandt ist,
• leitfähige Streifen (174; 192), die sich hauptsächlich parallel zu der Vorderseite in mindestens zwei verschiedene Richtungen erstrecken, wobei sich jeder leitfähige Streifen von einem ersten Ende aus bis zu einem zweiten Ende erstreckt, das elektrisch mit einem jeweiligen Eingang eines Sensors für elektrische Ladungen verbunden ist,
wobei die leitfähigen Streifen umfassen:
- leitfähige Kacheln (172; 192), die alle zueinander identisch sind und alle im gleichen Abstand von der Außenseite gelegen sind, wobei diese leitfähigen Kacheln auf der Vorderseite der dielektrischen Schicht verteilt sind und durch ein dielektrisches Material mechanisch voneinander getrennt sind, wobei das kleinste Maß jeder Kachel größer als 300 µm ist, wobei das kleinste Maß einer Kachel gleich der Länge der kürzesten Kante des Rechtecks mit der kleinsten Fläche ist, das diese Kachel vollständig enthält, und
- elektrische Anschlüsse (88), die unter der dielektrischen Schicht (72) gelegen sind, die leitfähige Kacheln elektrisch in Reihe so verbinden, dass die leitfähigen Streifen gebildet werden, wobei diese elektrischen Anschlüsse so gestaltet sind, dass jede leitfähige Kachel einem einzigen leitfähigen Streifen angehört und jede Kante einer Kachel zu einer Kante einer anderen Kachel benachbart ist, die einem anderen leitfähigen Streifen angehört,
**dadurch gekennzeichnet, dass**:
- jede Kachel (172; 192) ein Dreieck ist und
- die elektrischen Anschlüsse elektrisch in Reihe verbinden:
• jede zweite leitfähige Kachel (172b; 192i) unter den leitfähigen Kacheln, die hintereinander entlang derselben ersten Linie (178; 198) parallel zu einer ersten Richtung ausgerichtet sind, wobei diese elektrisch untereinander verbundenen leitfähigen Kacheln als "erste Kacheln" bezeichnet werden und wobei die anderen leitfähigen Kacheln (172f; 192h), als "zweite Kacheln" bezeichnet, die hintereinander entlang derselben ersten Linie (178; 198) ausgerichtet sind, ebenfalls elektrisch untereinander in Reihe verbunden sind, dabei jedoch von den ersten Kacheln elektrisch isoliert sind,
• jede zweite leitfähige Kachel (172a; 192j) unter den leitfähigen Kacheln, die hintereinander entlang derselben zweiten Linie (176; 196) parallel zu einer zweiten Richtung, die in Bezug auf die erste Richtung winklig versetzt ist, ausgerichtet sind, wobei diese elektrisch untereinander verbundenen leitfähigen Kacheln als "dritte Kacheln" bezeichnet werden und wobei die anderen leitfähigen Kacheln (172d; 192g), als "vierte Kacheln" bezeichnet, die hintereinander entlang derselben zweiten Linie (176) ausgerichtet sind, ebenfalls elektrisch untereinander in Reihe verbunden sind, dabei jedoch von den dritten Kacheln elektrisch isoliert sind.

5. Platte nach Anspruch 4, wobei jede leitfähige Kachel ein Polygon ist und die leitfähigen Kacheln auf der Vorderseite der dielektrischen Schicht so verteilt sind, dass sie eine periodische Pflasterung dieser Vorderseite bilden.

6. Platte nach Anspruch 4 oder 5, wobei:
- die Ausleseplatte eine resistive Schicht (36; 134, 136) umfasst, die alle leitfähigen Streifen bedeckt, wobei diese resistive Schicht geeignet ist, die Verteilung der Sekundärladungen der Lawine so zu erweitern, dass sie oberhalb von mehreren leitfähigen Streifen verteilt werden, und
- alle Kacheln im gleichen Abstand von dieser resistiven Schicht gelegen sind.

7. Platte nach Anspruch 6, wobei die Ausleseplatte eine weitere dielektrische Schicht (76) umfasst, die zwischen der resistiven Schicht (36; 134, 136) und den leitfähigen Streifen (37; 174) angeordnet ist und die alle leitfähigen Streifen bedeckt, wobei jeder Stapel aus einem leitfähigen Streifen mit dieser weiteren dielektrischen Schicht und die resistive Schicht somit einen jeweiligen Kondensator bilden.

8. Platte nach einem der Ansprüche 4 bis 7, wobei:
- die zweite Richtung winklig um 60° in Bezug auf die erste Richtung versetzt ist und
- die elektrischen Anschlüsse elektrisch jede zweite leitfähige Kachel (172c) unter den leitfähigen Kacheln verbinden, die hintereinander entlang derselben dritten Linie (180) parallel zu einer dritten Richtung, die in Bezug auf die erste Richtung winklig um 120° versetzt ist, angeordnet sind, wobei diese elektrisch untereinander verbundenen leitfähigen Kacheln als "fünfte Kacheln" bezeichnet werden und die anderen leitfähigen Kacheln (172e), als "sechste Kacheln" bezeichnet, die hintereinander entlang derselben dritten Linie (180) ausgerichtet sind, ebenfalls elektrisch untereinander in Reihe verbunden sind, dabei jedoch von den fünften Kacheln elektrisch isoliert sind.

9. Platte nach einem der Ansprüche 4 bis 7, wobei die zweite Richtung in Bezug auf die erste Richtung winklig um 90° versetzt ist.

## Claims

1. Gaseous elementary-particle detector, this detector comprising:
- a gas chamber (4; 122) enclosing a gas (6; 124) able to generate at least one primary charge when it is passed through by the elementary particle to be detected, this primary charge either being an electron or an ion,
- an amplifying device (40; 124, 130, 132, 134, 136, 142) able, from the generated primary charge, to produce an avalanche (42; 144, 146) of secondary charges,
- a readout plate (170; 190) according to any one of Claims 4 to 9.

2. Detector according to Claim 1, wherein:
- the detector comprises:
• an electrode (14),
• a mesh (16) that is entirely made of an electrically conductive material and that is drilled with a multitude of through-holes (20), the electrode and the mesh being separated from each other by a first volume (18) of said gas and the mesh and the conductive strips being separated from each other by a second volume (32) of said gas,
• a first power source (22) able to apply a first potential difference between the electrode and the mesh, suitable for propelling the primary charge through one of the holes of the mesh, and
- the amplifying device (40) comprises the mesh (16), the second volume (32) of gas and a second power source (38) able to create, inside the second volume of said gas, an electric field suitable for generating the avalanche of secondary charges in response to the mesh being passed through by the primary charge.

3. Detector according to Claim 1, wherein:
- the detector comprises:
• a highly resistive plate (130) equipped with a front face making direct contact with the gas and a rear face located on the side opposite to this front face, this highly resistive plate being made of a material the resistivity of which at 20°C is comprised between 10⁶ Ω.cm and 10¹² Ω.cm,
• a planar first electrode (34) located on the side of the rear face of the highly resistive plate,
• a second electrode (136) separated from the highly resistive plate by a volume (124) of said gas, this second electrode being chosen from the group consisting of a resistive film or conductive strips,
• a power source (142) able to apply, between the first and second electrodes, a potential difference able to generate the avalanche (144, 146) of secondary charges in response to the appearance of the primary charge in the interior of the volume (124) of said gas,
- the amplifying device comprising the first and second electrodes (134, 136), the volume (124) of gas and the power source (142).

4. Readout plate for a gaseous detector, in which the readout plate (170; 190) comprises an exterior face (39) arranged so as to be struck by an avalanche of secondary charges and, in order of decreasing distance from its exterior face:
• a dielectric layer (72) having a front face turned toward the exterior face,
• conductive strips (174; 192) extending mainly parallel to the front face in at least two different directions, each conductive strip extending from a first end to a second end electrically connected to a respective input of an electric-charge sensor,
and in which the conductive strips comprise:
- conductive tiles (172; 192) that are all identical to one another and all located at the same distance from the exterior face, these conductive tiles being distributed over the front face of the dielectric layer and being mechanically separated from one another by a dielectric material, the smallest dimension of each tile being larger than 300 µm, the smallest dimension of a tile being equal to the length of the smallest side of the rectangle of smallest area that entirely contains this tile, and
- electrical connections (88), which are located under the dielectric layer (72) and which electrically connect the conductive tiles in series so as to form said conductive strips, these electrical connections being arranged so that each conductive tile belongs to a single conductive strip and each side of one tile is adjacent to the side of another tile belonging to another conductive strip,
**characterized in that**:
- each tile (172; 192) is a triangle, and
- the electrical connections electrically connect in series:
• one conductive tile (172b; 192i) in two among the conductive tiles aligned with one another along a given first line (178; 198) parallel to a first direction, these conductive tiles that are electrically connected with one another being called "first tiles" and the other conductive tiles (172f; 192h), which are called "second tiles", and which are aligned with one another along the same first line (178; 198), also being electrically connected to one another in series while remaining electrically insulated from said first tiles,
• one conductive tile (172a; 192j) in two among the conductive tiles aligned with one another along a given second line (176; 196) parallel to a second direction angularly offset with respect to the first direction, these conductive tiles that are electrically connected to one another being called "third tiles" and the other conductive tiles (172d; 192g), which are called "fourth tiles", and which are aligned with one another along the same second line (176), also being electrically connected to one another in series while remaining electrically insulated from said third tiles.

5. Plate according to Claim 4, wherein each conductive tile is a polygon and the conductive tiles are distributed over the front face of the dielectric layer so as to form a periodic tessellation of this front face.

6. Plate according to Claim 4 or 5, wherein:
- the readout plate comprises a resistive layer (36; 134, 136) that covers all the conductive strips, this resistive layer being able to widen the distribution of the secondary charges of the avalanche so as to distribute them above a plurality of conductive strips, and
- all the tiles are located at the same distance from this resistive layer.

7. Plate according to Claim 6, wherein the readout plate comprises another dielectric layer (76) interposed between the resistive layer (36; 134, 136) and the conductive strips (37; 174) and that covers all the conductive strips, each stack of a conductive strip with this other dielectric layer and the resistive layer thus forming a respective capacitor.

8. Plate according to any one of Claims 4 to 7, wherein:
- the second direction is angularly offset by 60° with respect to the first direction, and
- the electrical connections electrically connect in series one conductive tile (172c) in two among the conductive tiles that are aligned with one another along a given third line (180) parallel to a third direction angularly offset by 120° with respect to the first direction, these conductive tiles that are electrically connected to one another being called "fifth tiles" and the other conductive tiles (172e), which are called "sixth tiles", and which are aligned with one another along the same third line (180), also being electrically connected in series while remaining electrically insulated from said fifth tiles.

9. Plate according to any one of Claims 4 to 7, wherein the second direction is angularly offset by 90° with respect to the first direction.
